# EUROPEAN PATENT APPLICATION

(11) **EP 3 967 808 A1**
(43) Date of publication of application: **16.03.2022**
(21) Application number: 21196523.1
(22) Date of filing: 14.09.2021
(51) Int. Cl.: D21H 17/24, C08J 5/24, B27N 3/00, B27N 3/04, B27N 3/08, B27N 3/12

(54) **COMPOSITE, COMPACT, AND METHOD FOR MANUFACTURING COMPACT**

(30) Priority: 15.09.2020 JP 2020154424
(71) Applicant: Seiko Epson Corporation, Tokyo 160-8801 (JP)
(72) Inventor: YOKOKAWA, Shinobu, Suwa-shi, 392-8502 (JP); TANAKA, Hideki, Suwa-shi, 392-8502 (JP); NAKAI, Yoko, Suwa-shi, 392-8502 (JP); HIGUCHI, Naotaka, Suwa-shi, 392-8502 (JP)
(74) Representative: Miller Sturt Kenyon

(57) **Abstract**

A composite includes a fiber and a dextrin, wherein at least part of the dextrin adheres to the fiber, the molecular weight distribution curve of the dextrin has a first maximum and a second maximum, the weight average molecular weight value based on a peak belonging to the first maximum is less than 6000, and the weight average molecular weight value based on a peak belonging to the second maximum is 6000 or more.

## Description

The present application is based on, and claims priority from JP Application Serial Number 2020-154424, filed September 15, 2020, the disclosure of which is hereby incorporated by reference herein in its entirety.

### BACKGROUND

### 1. Technical Field

The present disclosure relates to a composite, a compact, and a method for manufacturing a compact.

### 2. Related Art

As a method for manufacturing a compact, such as paper, a method called a dry method, which uses no or little water, has been expected. For example, International Publication No. WO2018/043034 discloses a technique for manufacturing a sheet by mixing a fiber and a thermoplastic resin by a dry process and applying heat to the mixture in an accumulated state.

In addition, JP-A-2004-115960 discloses a paper strength enhancer that can reduce the energy consumption in a drying process by using starch with a low degree of polymerization.

However, the sheet manufacturing method disclosed in International Publication No. WO2018/043034 uses a thermoplastic resin, such as a polyester resin, in binding of fiber molecules. Since many of such resins are synthesized from petroleum, the process of manufacturing the resin involves a large amount of CO₂ discharge, and the biodegradability of the manufactured sheet is not always excellent.

Since the paper strength enhancer composed of starch as disclosed in JP-A-2004-115960 is a plant-derived material, the amount of CO₂ discharge in the manufacturing process is small, and the biodegradability of the sheet is also excellent. However, when paper is manufactured using this paper strength enhancer, a large amount of water is used. Accordingly, a large amount of energy is consumed for drying, compared to a dry papermaking process.

Furthermore, even if the paper strength enhancer described in JP-A-2004-115960 is used instead of the polyester resin in the technique described in International Publication No. WO2018/043034, since the sheet is manufactured by a dry process, there is a risk that the mechanical strength of the sheet is insufficient.

### SUMMARY

In an aspect of a composite according to the present disclosure, the composite includes a fiber and a dextrin, in which at least part of the dextrin adheres to the fiber, the molecular weight distribution curve of the dextrin has a first maximum and a second maximum, the weight average molecular weight value based on a peak belonging to the first maximum is less than 6000, and the weight average molecular weight value based on a peak belonging to the second maximum is 6000 or more.

In an aspect of a compact according to the present disclosure, the above-described composite is used as a raw material, and the compact is formed in a predetermined shape.

In an aspect of a method for manufacturing a compact according to the present disclosure, the method includes a mixing step of mixing a fiber and a dextrin of which the molecular weight distribution curve has a first maximum and a second maximum, in which the weight average molecular weight value based on a peak belonging to the first maximum is less than 6000, and the weight average molecular weight value based on a peak belonging to the second maximum is 6000 or more, to obtain a mixture; a humidifying step of humidifying the mixture; and a forming step of pressurizing and heating the humidified mixture to obtain a compact.

### BRIEF DESCRIPTION OF THE DRAWINGS

FIG. 1 is a schematic diagram illustrating an enlarged example of a composite according to an embodiment.
FIG. 2 is a diagram schematically illustrating a compact-manufacturing apparatus according to an embodiment.
FIG. 3 shows molecular weight distribution curves of Examples and Comparative Example.
FIG. 4 is a plot showing a relationship between the specific tensile strength and the water content in Examples and Comparative Example.

### DESCRIPTION OF EXEMPLARY EMBODIMENTS

Some embodiments of the present disclosure will now be described. The embodiments described below describe examples of the present disclosure. The present disclosure is not limited to the following embodiments, and includes various modifications that are implemented within a range not changing the gist of the present disclosure. Not all of the configurations described below are essential configurations of the present disclosure.

### 1. Composite

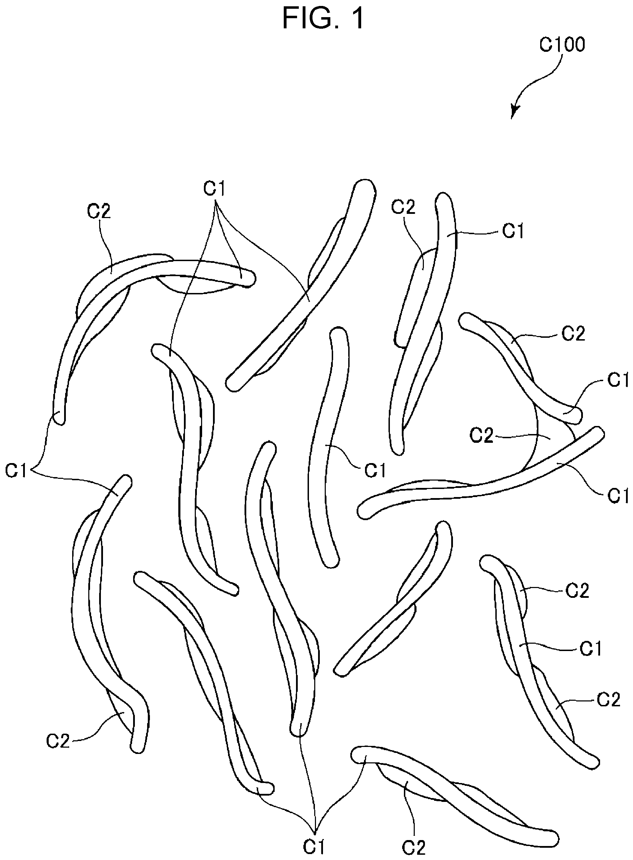

A composite according to the present embodiment includes a fiber and a dextrin. FIG. 1 is a schematic diagram showing an enlarged view of the composite according to the present embodiment.

The composite C100 according to the present embodiment includes a fiber C1 and a dextrin C2, and at least part of the dextrin C2 adheres to the fiber C1. The dextrin C2 has characteristics in that the molecular weight distribution curve thereof has a first maximum and a second maximum, the weight average molecular weight value based on a peak belonging to the first maximum is less than 6000, and the weight average molecular weight value based on a peak belonging to the second maximum is 6000 or more.

A compact having a desired shape can be suitably manufactured by using such composite C100, while suppressing the use of a material derived from petroleum, and using only a small amount of water. That is, since this composite includes a dextrin of which the molecular weight distribution curve is a so-called bimodal distribution, a compact, such as paper, formed therefrom can also have good mechanical strength while having good biodegradability. The lower molecular weight dextrin enhances the adhesion to the fiber with a small amount of water, and the higher molecular weight dextrin enhances the binding strength between fiber molecules and the mechanical strength when they are bound. Accordingly, the mechanical strength of the compact, such as paper, can be improved by using this composite.

Furthermore, since the amount of a dextrin having a medium molecular weight between the first maximum and the second maximum is relatively small, the low molecular weight dextrin and the high molecular weight dextrin are assigned to the respective functions, and the above-mentioned effects can be more efficiently exhibited. In addition, consequently, the low molecular weight dextrin can easily work, and the amount of water necessary for formation can be decreased.

The composite C100 of the present embodiment can be suitably applied to a forming method through a dry process because of the above-described reasons. Accordingly, the composite C100 is advantageous also from the viewpoint of the productivity and the production cost of the compact, energy saving, and miniaturization of the compact-manufacturing equipment. In addition, the water absorbability is improved by using a dextrin having a predetermined molecular weight distribution curve as described above, and adhesion to the fiber suitably proceeds even when a small amount of water is added. This also makes it is possible to improve the productivity of the compact using the composite C100.

In addition, the dextrin C2 having a predetermined molecular weight distribution curve as described above suitably exhibits adhesiveness with the fiber C1 by a small amount of water and heating and also exhibits mechanical strength. Accordingly, since the dextrin C2 can exhibit both excellent coatability and bindability to the fiber C1, the compact manufactured using the composite C100 can also have excellent strength.

In addition, since the dextrin C2 having a predetermined molecular weight distribution curve described above is unlikely to cause undesirable denaturation by addition of water, the compact manufactured using the composite C100 has excellent recyclability. In addition, scattering of the fiber C1 during the manufacturing of the compact using the composite C100 can be more effectively prevented. In addition, the composite C100 and the compact manufactured using the composite C100 also have excellent biodegradability. Furthermore, since binding strength can be exhibited with a small amount of water, the recyclability in manufacturing a compact again by a dry process is also excellent. Incidentally, the term "recyclability" here refers to the degree of deterioration in performance of a compact manufactured again by a dry process from the raw material obtained by defibrating a compact containing a fiber and a dextrin. That is, when a compact manufactured again is superior in tensile strength and so on, the recyclability is superior, and when a compact manufactured again is inferior in tensile strength and so on, the recyclability is inferior.

In contrast, when the conditions of the molecular weight distribution curve are not satisfied, satisfactory results are not obtained. For example, even if a composite includes a fiber and a dextrin adhering to the fiber, when the molecular weight distribution curve of the dextrin has only one maximum, the strength of the compact manufactured using the composite is relatively low, and the amount of water to be used is relatively large.

In addition, even if a composite includes a fiber and a dextrin adhering to the fiber, when the molecular weight distribution curve is monomodal, at least one of the water absorbability and the mechanical strength of the dextrin decreases. Accordingly, treatment with a larger amount of water or blending of a larger amount of the dextrin is necessary, the productivity and the production cost of the compact using the composite are significantly worsened, and the size of the compact-manufacturing equipment is increased, which is disadvantageous also from the viewpoint of energy saving. In addition, the recyclability of the compact manufactured using the composite is also decreased.

Here, the molecular weight distribution curve of a dextrin in the present specification is a differential molecular weight distribution curve and is determined by a gel permeation chromatography (GPC) method.

The measurement conditions are as follows:
Measurement column: TSKgel SuperAWM-H × 1 (6.0 mm I.D. × 15 cm) (manufactured by TOSOH Corporation);
Eluent: 10 mM LiBr in DMSO;
Flow rate: 0.3 mL/min;
Sample concentration: 2.0 g/L;
Injection volume: 20 µL;
Column temperature: 40°C;
Detector: HLC-8320GPC built-in RI detector, UV-8320;
Detection conditions: RI: Pol(+), Res (0.5 s), UV: λ (254 nm), Pol(+), Res (0.5 s);
Apparatus: HLC-8320GPC/UV-8320 (manufactured by TOSOH Corporation);
Sample preparation: put a weighed sample (every sample is powder) in a sample cup, add an eluent, set a blast and heat dryer WFO-1020 to 100°C, heat for 1 hour, perform stirring and dissolving, then return the temperature to room temperature, and perform filtration with a 0.45 µm PTFE filter manufactured by Millipore;
Standard sample: standard pullulan (0.5 g/L), manufactured by Showa Denko K.K.; and
Sampling pitch: 100 msec (without smoothing).

The elution chart obtained under the above-mentioned conditions can be analyzed, for example, as follows:
Software: EcoSEC Data Analysis (ver. 1.3.1) (manufactured by TOSOH Corporation).
(1) Draw a baseline and specify peak(s). When multiple peaks are present, divide the peaks using the minimum chart value.
(2) Convert the elution time into a molecular weight using a calibration curve drawn using pullulan as the standard (fitting with a cubic function).
(3) Obtain each peak area, and obtain the concentration fraction of each elution time.
(4) Sequentially integrate the concentration fractions, plot the molecular weight (logarithmic value) on the horizontal axis and the integrated value of the concentration fractions on the vertical axis to obtain an integrated molecular weight distribution curve.
(5) Obtain the differential value of the curve at each molecular weight (the slope of the integrated molecular weight distribution curve).
(6) Plot the molecular weight (logarithmic value) on the horizontal axis and the differential value on the vertical axis to obtain a differential molecular weight distribution curve.
(7) Obtain the weight average molecular weight Mw corresponding to each maximum molecular weight based on the following calculation equation: Mw = Σ(Hi × Mi)/ΣHi,
   Hi: height from the baseline, and
   Mi: molecular weight.
(8) Obtain the area (S1) of the integrated molecular weight distribution curve in the molecular weight range of less than the minimum value and the area (S2) of the integrated molecular weight distribution curve in the molecular weight range of not less than the minimum value by using analysis software.

Incidentally, the unit of the vertical axis of the differential molecular weight distribution curve is "dw/dLog(M)" (the value obtained by differentiating a concentration fraction by the logarithmic value of the molecular weight). The shape of the graph is the same as that when the vertical axis represents the concentration fraction, as a result.

In the present specification, the forming method by a dry process refers to a method in which the raw material for forming is not immersed in liquid containing water in the process of manufacturing a compact, and a method using a small amount of water, for example, a method of spraying liquid containing water to a raw material for forming or a method of humidifying a raw material for forming, is also included in the forming method by a dry process.

### 1.1. Fiber

The composite C100 includes a fiber C1. The fiber C1 is usually a main component of the compact manufactured using the composite C100 and is a component that highly contributes to retention of the shape of the compact and largely influences the characteristics, such as the strength, of the compact.

The fiber C1 may be made of a material having at least one chemical structure selected from a hydroxy group, a carbonyl group, and an amino group.

Consequently, a hydrogen bond is easily formed between the fiber C1 and a dextrin C2 described in detail later, and the bond strength between the fiber C1 and the dextrin C2 and the strength as the whole compact manufactured using the composite C100, for example, the tensile strength of a sheet-like compact, can be further increased.

Although the fiber C1 may be a synthetic fiber made of a synthetic resin, such as polypropylene, polyester, or polyurethane, the fiber C1 may be a natural fiber, i.e., a biomass-derived fiber or a cellulose fiber.

Consequently, it is possible to respond more appropriately to, for example, environmental problems and saving of reserve resources. In particular, when the fiber C1 is a cellulose fiber, the following effects are also obtained.

That is, cellulose is an abundant natural material derived from plants, and the use of cellulose as a fiber forming the composite C100 responds further appropriately to, for example, environmental problems and saving of reserve resources and contributes to stable supply, cost reduction, etc. of the composite C100 and the compact manufactured using the composite C100. In addition, among various types of fibers, a cellulose fiber has particularly high theoretical strength and is advantageous also from the viewpoint of further improving the strength of the compact. Furthermore, a cellulose fiber has good biodegradability.

The cellulose fiber is usually mainly made of cellulose and may include a component other than cellulose. Examples of the other component include hemicellulose and lignin. In addition, as the cellulose fiber, one that has been subjected to treatment, such as bleaching, may be used.

In addition, the fiber C1 may be one subjected to treatment, such as ultraviolet irradiation treatment, ozone treatment, or plasma treatment. Consequently, the hydrophilicity of the fiber C1 can be increased, and the affinity with the dextrin C2 can be increased. More specifically, a functional group, such as a hydroxyl group, can be introduced to the surface of the fiber C1 by such treatment, and a hydrogen bond can be more efficiently formed with the dextrin C2.

The composite C100 includes the dextrin C2, in addition to the fiber C1, and at least part of the dextrin C2 adheres to the fiber C1. The composite C100 may include the fiber C1 to which the dextrin C2 adheres and also the fiber C1 to which the dextrin C2 does not adhere.

The average length of the fiber C1 is not particularly limited and may be 0.1 mm or more and 50 mm or less, 0.2 mm or more and 5.0 mm or less, or 0.3 mm or more and 3.0 mm or less.

Consequently, the stability, the strength, and so on of the shape of the compact manufactured using the composite C100 can be further improved.

The average thickness of the fiber C1 is not particularly limited and may be 0.005 mm or more and 0.5 mm or less or 0.010 mm or more and 0.05 mm or less.

Consequently, the stability, the strength, and so on of the shape of the compact manufactured using the composite C100 can be further improved. In addition, occurrence of undesirable unevenness on the surface of the compact manufactured using the composite C100 can be more effectively prevented.

The average aspect ratio of the fiber C1, i.e., the ratio of the average length to the average thickness is not particularly limited and may be 10 or more and 1000 or less or 15 or more and 500 or less.

Consequently, the stability, the strength, and so on of the shape of the compact manufactured using the composite C100 can be further improved. In addition, occurrence of undesirable unevenness on the surface of the compact manufactured using the composite C100 can be more effectively prevented.

The content of the fiber C1 in the composite C100 is not particularly limited and may be 60.0 mass% or more and 99.0 mass% or less, 85.0 mass% or more and 98.0 mass% or less, or 88.0 mass% or more and 97.0 mass% or less.

Consequently, the characteristics such as the stability and the strength of the shape of the compact manufactured using the composite C100 can be further improved. In addition, the formability when the compact is manufactured can be further improved, which is advantageous for also improving the productivity of the compact.

### 1.2. Dextrin

The composite C100 includes the dextrin C2 with a predetermined molecular weight distribution range as described above. The dextrin C2 is a component that functions as a binder for binding the fiber C1 molecules in the compact manufactured using the composite C100. In particular, the dextrin C2 can be derived from biomass and can respond appropriately to, for example, environmental problems and saving of reserve resources. In addition, when the dextrin C2 has a predetermined molecular weight distribution as described above, the water absorbability is improved, and when water is added, the water can be promptly absorbed. In addition, the adhesion can be exhibited at a relatively low temperature by water in a small amount relative to the amount of the dextrin, and excellent bindability can be obtained.

The dextrin C2 is a polymer material obtained by polymerization of a plurality of α-glucose molecules through glycoside bonds. The dextrin C2 may be a straight chain or may include a branch.

As described above, the molecular weight distribution curve of the dextrin C2 has a first maximum and a second maximum, the weight average molecular weight value based on a peak belonging to the first maximum is less than 6000, and the weight average molecular weight value based on a peak belonging to the second maximum is 6000 or more. When the molecular weight distribution curve satisfies this requirement, the effects described above are exhibited.

The weight average molecular weight value based on a peak belonging to the first maximum may be 4000 or less, 3000 or less, or 2000 or less. In addition, the weight average molecular weight value based on a peak belonging to the second maximum may be 15000 or more or 30000 or more.

Furthermore, the molecular weight distribution curve of the dextrin may have a minimum within a molecular weight range of 2000 or more and 10000 or less. When such a dextrin is used, the amount of the dextrin having a molecular weight between the first maximum and the second maximum is relatively small. Therefore, the low molecular weight dextrin and the high molecular weight dextrin can be assigned to the respective functions, and the above-described effects can be more efficiently exhibited. In addition, consequently, the low molecular weight dextrin can more easily function, and the amount of water necessary for formation can thereby be decreased.

The molecular weight distribution curve may have a minimum in a molecular weight of 2500 or more and 8000 or less or 3000 or more and 5000 or less.

Furthermore, in the molecular weight distribution curve of the dextrin, the ratio of the area S2 of the molecular weight range of not less than the minimum to the area S1 of the molecular weight range of less than the minimum, S2/S1, may be 0.3 or more and 8.0 or less. When such a dextrin is used, the balance between the action by the low molecular weight dextrin and the action by the high molecular weight dextrin can be more improved.

The value of ratio (S2/S1) may be 0.3 or more and 5.0 or less, 0.4 or more and 3.0 or less, or 0.5 or more and 2.0 or less. When the ratio (S2/S1) is within such a range, as actually proved by Examples described below, even if a composite is formed with a small water content, the compact can have high mechanical strength.

The dextrin C2 controlled so as to give such a molecular weight distribution curve having the above-mentioned predetermined shape can be obtained by, for example, that natural starch as a raw material is suspended in water, and sulfuric acid, hydrochloric acid, or sodium hypochlorite is acted on the suspension under conditions that the starch is not gelatinized; or that natural starch, directly or after addition of a significantly small amount of a water-diluted volatile acid, such as hydrochloric acid, and well mixing, maturing, and drying at low temperature, is heated to 120°C or more and 180°C or less; or that a glue liquid obtained by heating natural starch together with water is subjected to treatment, such as hydrolysis by an acid or an enzyme, and the resulting several types of dextrins are mixed. Alternatively, the dextrin may be a commercially available one, for example, those distributed under the names of Dextrol, Yellow dextrin, A-sol, Enzyme-modified dextrin, and British gum, or they may be used as a mixture that gives a molecular weight distribution curve having the above-described predetermined shape.

As the natural starch that is a raw material of the dextrin C2, for example, starch derived from a variety of plants can be used. More specifically, for example, those derived from cereals, such as corn, wheat, and rice; beans, such as broad bean, mung bean, and adzuki bean; potatoes, such as potato, sweet potato, and tapioca; wild grasses, such as dogtooth violet, bracken, and kudzu; and palms, such as sago palm, can be used.

As described above, the composite C100 includes the fiber C1 and the dextrin C2, in which although at least part of the dextrin C2 adheres to the fiber C1, the dextrin C2 not adhering to the fiber C1 may be included in addition to the dextrin C2 adhering to the fiber C1.

The content of the dextrin C2 may be 2.0 mass% or more and 60.0 mass% or less, 3.0 mass% or more and 40.0 mass% or less, or 4.0 mass% or more and 15.0 mass% or less based on the total amount of the composite C100. Incidentally, the content of a dextrin can be measured by component analysis, such as an NMR method, and can be measured using pretreatment, such as enzymatic decomposition, as needed.

Consequently, the composite C100 can have particularly excellent water absorbability, and the characteristics such as the stability and the strength of the shape of the compact manufactured using the composite C100 can be further improved. In addition, the formability when the compact is manufactured can be further improved, which is advantageous for also improving the productivity of the compact.

### 1.3. Other component

The composite C100 may include a component other than the above-described fiber C1 and dextrin C2. Examples of such a component include natural gum glue, such as etherified tamarind gum, etherified locust bean gum, etherified guar gum, and acacia Arabic gum; fibrin-induced glue, such as etherified carboxymethyl cellulose and hydroxyethyl cellulose; polysaccharides, such as glycogen, hyaluronic acid, etherified starch, and esterified starch; seaweeds, such as sodium alginate and agar; animal proteins, such as collagen, gelatin, and hydrolyzed collagen; a sizing agent; impurities derived from the fiber C1; and impurities derived from the dextrin C2. In addition, the composite C100 may include a component for imparting desired performance to a compact described later formed using the composite. Examples of such a component include a filler, such as calcium carbonate, talc, titanium oxide, silica, and diatomaceous earth; a coloring material, such as a pigment, a dye, and a toner; and paper strength enhancer, such as polyvinyl alcohol (PVA).

The content of the components other than the fiber C1 and the dextrin C2 in the composite C100 may be 10 mass% or less, 5.0 mass% or less, or 2.0 mass% or less.

The composite C100 may or may not include water. The water content of the composite C100 left in an environment of 27°C/98%RH for 2 hours is, for example, 10 mass% or more and 55 mass% or less. As described above, the composite C100 exhibits good adhesiveness and adhesive strength between a fiber and a dextrin with a small amount of water. Accordingly, when a compact is formed using the composite C100, a sufficient amount of water to be contained in the composite C100 is about 20 mass% as the water content, and the water content may be 20 mass% or less, 15 mass% or less, or 10 mass% or less.

Incidentally, the water content can be measured by, for example, weighing 0.7 g of the composite C100, sieve-accumulating the composite in a disk shape on cooking paper using a Raffine stainless steel automatic powder sieve M manufactured by Pearl Metal Co., Ltd., putting the composite on a stainless steel Pishat net basket (manufactured by Shinetsu Works Co., Ltd.) together with the cooking paper, and measuring the water content with a heat drying type moisture meter (manufactured by A&D Co., Ltd., MX-50) under conditions that the composite has been left in an environment set to 27°C/98%RH using a thermostat (manufactured by ESPEC Corp., thermo-hygrostat Platinous (registered trademark) K series PL-3KPH) for 2 hours. Incidentally, the water contents of composites left for 2 hours in an environment of 27°C/98%RH shown in Examples described below are also values obtained by the measurement under the above-described conditions.

### 2. Compact

The compact according to the present embodiment will now be described. The compact according to the present embodiment is that formed into a predetermined shape using the above-described composite C100 of the present embodiment as a raw material. Consequently, it is possible to provide a compact having a desired shape while suppressing the use of a material derived from petroleum. In addition, such a compact also has excellent biodegradability. Furthermore, such a compact also has excellent recyclability, strength, and so on.

The shape of the compact is not particularly limited and may be any shape, such as a sheet-like, block-like, spherical, or three-dimensional shape, but the compact may be in a sheet-like form. Incidentally, the term "sheet-like" here refers to a compact formed so as to have a thickness of 30 µm or more and 30 mm or less and a density of 0.05 g/cm³ or more and 1.5 g/cm³ or less. Consequently, for example, the compact can be suitably used as a recording medium. In addition, the compact can be more efficiently manufactured by the manufacturing method and the manufacturing apparatus as described below.

The compact may be at least partially made of the composite C100 described above, and may include a portion that is not made of the composite C100. The use of the compact is not particularly limited, and examples thereof include a recording medium, a liquid absorber, a buffer material, and an acoustic material. In addition, the compact after a forming step may be subjected to machining such as cutting or various chemical treatment before use.

Furthermore, when the compact is a liquid absorber, the thickness thereof may be 0.3 mm or more and 30 mm or less. In addition, the density may be 0.05 g/m³ or more and 0.4 g/m³ or less. Consequently, the compact can be suitably used as a liquid absorber. In addition, the compact can be more efficiently manufactured by the manufacturing method and the manufacturing apparatus as described below.

### 3. Method for manufacturing compact

A method for manufacturing a compact will now be described. The method for manufacturing a compact according to an embodiment includes a mixing step of mixing a fiber and a dextrin having of which the molecular weight distribution curve has the above-described characteristics to obtain a mixture; a humidifying step of humidifying the mixture; and a forming step of heating and pressurizing the mixture to form the mixture into a predetermined shape.

Consequently, it is possible to provide a method for manufacturing a compact that can suitably manufacture a compact having a desired shape while suppressing the use of a material derived from petroleum even if the addition amount of water is a relatively small. Accordingly, the method is advantageous also from the viewpoint of the productivity and the production cost of the compact, energy saving, and miniaturization of the compact-manufacturing equipment. In addition, the compact manufactured by the manufacturing method of the present embodiment also has excellent biodegradability. In addition, the manufactured compact can be also easily recycled. Furthermore, the compact can have excellent strength, etc., and, for example, scattering of the fiber during the manufacturing of the compact can be more effectively prevented.

### 3.1. Mixing step

In the mixing step, a fiber and a dextrin of which the molecular weight distribution curve has the above-described characteristics are mixed. Prior to the mixing step, a raw material-preparing step of preparing raw materials to be mixed may be performed. In the raw material-preparing step, at least a fiber and a dextrin of which the molecular weight distribution curve has the above-described characteristics are prepared.

The dextrin that is prepared in the raw material-preparing step may be a dextrin in a particle form or may be the dextrin in the above-described composite. Furthermore, the dextrin that is prepared in the raw material-preparing step may be that obtained by, for example, defibration or pulverization of the above-described composite or the above-described compact. The aspect of using a dextrin obtained by defibration or pulverization of the above-described composite or the above-described compact corresponds to an aspect of recycling a composite or a compact. Since the composite and the compact of the present embodiment are unlikely to cause deterioration of the dextrin as described above, it is also excellent in that recycle is easy.

In addition, when a sheet-like composite is used as a raw material of a dextrin to be prepared in the raw material-preparing step, the space necessary for storing the raw material can be narrowed to also contribute to miniaturization of the compact-manufacturing apparatus. Furthermore, when the sheet-like composite is waste-paper used as, for example, a recording medium and is used for manufacturing a sheet-like compact, the number of reuse of the composite and the number of recycles can be increased.

When the dextrin prepared in the raw material-preparing step is in a particle form, the average particle diameter of the dextrin may be 1 µm or more and 100 µm or less, 3 µm or more and 50 µm or less, or 3 µm or more and 20 µm or less.

Consequently, the ease of handling and fluidity of the dextrin can be more improved, and the mixture can be more easily prepared. In addition, in a mixture state of a fiber and a dextrin, the effect of suppressing detachment of the dextrin from the mixture can be further enhanced.

Incidentally, in the present specification, the average particle diameter is a volume-based average particle diameter and can be determined by, for example, adding a sample to a dispersion medium that does not dissolve nor swell with the sample, dispersing it with an ultrasonic distributor for 3 minutes, and measuring the resulting dispersion with a Coulter counter method-type particle size distribution analyzer (manufactured by COULTER ELECTRONICS, Inc., TA-II model) with an aperture of 50 µm.

The mixture may include, in addition to the fiber and the dextrin described above, another component. Examples of such a component include the components mentioned in the above "1.3. Other component".

In the mixing step, the raw materials prepared in the raw material-preparing step are mixed. The mixture obtained in the mixing step at least includes a fiber and a dextrin of which the molecular weight distribution curve has the above-described characteristics. In addition, the mixture may include another component.

The mixing step can be carried out by mixing a fiber and a dextrin and may be performed by, for example, putting raw materials in a container and stirring them. The mixing step may be performed in a mixing section of a manufacturing apparatus described below.

### 3.2. Humidifying step

The humidifying step humidifies the mixture. The mixture to which water has been added in the humidifying step may be used as the composite described above. That is, since part or the whole of the surface of the dextrin has adhesion to the fiber and can adhere to the fiber by adding water to the mixture, the above-described composite is formed.

In addition, when the mixture is humidified in the in the humidifying step, the bond strength between the fiber and the dextrin and the bond strength between fiber molecules through the dextrin can be improved in the forming step described below, and the finally obtained compact can have sufficiently excellent strength and so on. In addition, forming in the forming step can be suitably performed in a relatively mild condition.

The method for humidifying the mixture is not particularly limited, and may be performed in a non-contact manner with the mixture, for example, by a method of putting the mixture in a high humidity environment, a method of allowing the mixture to pass through a high humidity space, a method of spraying mist of liquid containing water to the mixture, or a method of allowing the mixture to pass through a space in which mist of liquid containing water is floating. These methods may be performed alone or in combination of two or more thereof. Incidentally, the liquid containing water may contain, for example, a preservative, a fungicide, or a pesticide.

The humidification of the mixture may be performed, for example, in multiple steps in the process of manufacturing a compact. More specifically, for example, water may be introduced to the mixture by humidifying the raw materials of the mixture by humidification of a sheet-like composite including a fiber and a dextrin, humidification of coarse fragments of a sheet-like composite, humidification of a web obtained by accumulating a defibrated material, or humidification of a composition including a defibrated material of a sheet-like composite, for example, a defibrated material obtained by defibration of coarse fragments, or by a combination of two or more these humidification procedures.

When humidification of the mixture or the raw materials thereof is performed in multiple steps in the process of manufacturing a compact as described above, for example, there is no need to unnecessarily increase the amount of humidification in each step. As a result, for example, the transport speed of the mixture in the compact-manufacturing apparatus can be increased to further improve the productivity of the compact.

The amount of water that is added to the mixture in the humidifying step is not particularly limited, and the water content of the mixture at the time of completion of the humidifying step, that is, the rate of the mass of water contained in the mixture to the mass of the mixture at the time of completion of the humidifying step, may be 5.0 mass% or more and 25.0 mass% or less, 10.0 mass% or more and 20.0 mass% or less, or 10.0 mass% or more and 15.0 mass% or less. In particular, in the present embodiment, since the molecular weight distribution curve has the above-described characteristics, formability is unlikely to deteriorate even at a low water content such as 20 mass% or less.

Consequently, the dextrin can more suitably absorb water, and the subsequent forming step can be more suitably performed. As a result, the finally obtained compact can have more excellent strength, reliability, etc. In addition, since the time required for absorbing water by the dextrin can be relatively short, the productivity of the compact can be more improved. Furthermore, the consumption energy required for heating in the subsequent forming step can be significantly reduced compared to papermaking methods.

Incidentally, the water content can be obtained by measurement using, for example, a heat drying type moisture meter manufactured by A&D Co., Ltd.

### 3.3. Forming step

In the forming step, the humidified mixture is heated and pressurized to be formed into a predetermined shape. Consequently, a compact in which fiber molecules are bound to each other by the adhered dextrin is obtained. Incidentally, the humidifying step and the forming step may be performed simultaneously.

The heating temperature in the forming step is not particularly limited and may be 50°C or more and 180°C or less, 60°C or more and 150°C or less, or 70°C or more and 140°C or less.

Consequently, the adhesiveness of the water-absorbed dextrin can be sufficiently obtained, and the constituent materials of the compact can be suppressed from undesirably deteriorating. In addition, such a heating temperature may be adopted from the viewpoint of energy saving. Furthermore, the obtained compact can have more excellent heat resistance and mechanical strength at relatively low temperature such as room temperature. Incidentally, the temperature mentioned above is a sufficiently lower temperature than that when a synthetic resin, polyester, is used as a binder.

The pressurization in the forming step may be performed at 0.1 MPa or more and 100 MPa or less or 0.3 MPa or more and 20 MPa or less. This step can be performed using, for example, a heat press or a heat roller.

### 3.4. Compact-manufacturing apparatus

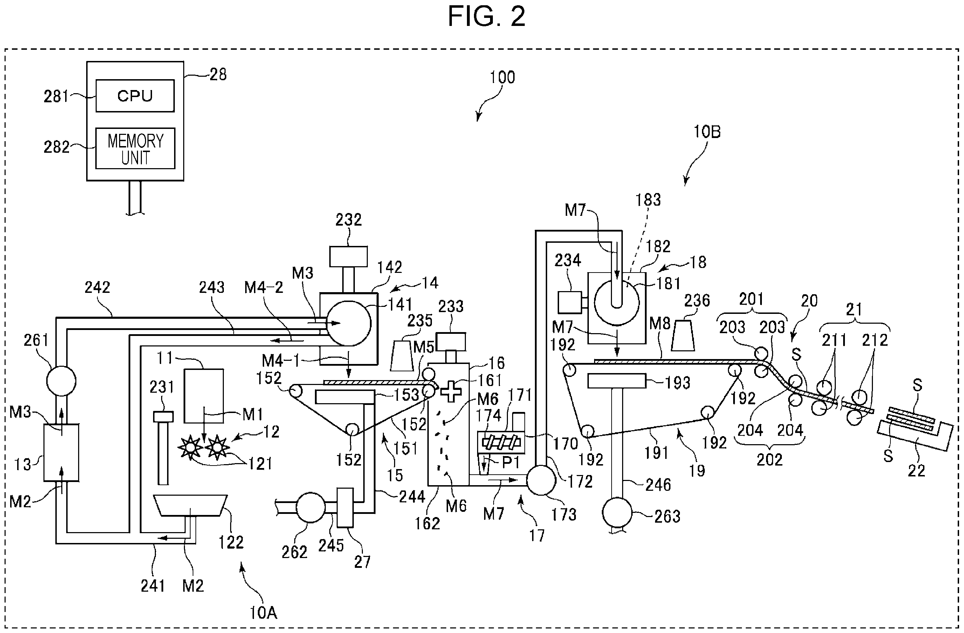

The compact-manufacturing apparatus that can be suitably applied to the method for manufacturing a compact will now be described. FIG. 2 is a schematic side view showing a suitable example of the compact-manufacturing apparatus.

Incidentally, in the following, the upper side of FIG. 2 may be referred to as "upper" or "upper portion", and the lower side may be referred to as "lower" or "lower portion". In addition, FIG. 2 is a schematic block diagram, and the positional relationship of each section of the compact-manufacturing apparatus 100 may be different from the actual positional relationship. In addition, in the drawing, the direction in which the fiber raw material M1, coarse fragment M2, defibrated material M3, first sorted material M4-1, second sorted material M4-2, first web M5, subdivided material M6, mixture M7, second web M8, and sheet S are transported, i.e., the direction indicated by arrows, is also referred to as a transportation direction. The tip side of the arrow is also referred to as the downstream side in the transportation direction, and the base end side of the arrow is also referred to as the upstream side in the transportation direction.

The compact-manufacturing apparatus 100 shown in FIG. 2 coarsely crushes, defibrates, and accumulates a fiber raw material M1 and forms this accumulated product into a compact by a formation section 20.

In addition, the compact manufactured with the compact-manufacturing apparatus 100 may have, for example, a sheet-like, shape such as recycled paper, or a block-like shape. The density of the compact is also not particularly limited, and the compact may be a compact having a relatively high fiber density such as a sheet, a relatively low fiber density such as sponge, or a mixture of these characteristics.

As the fiber raw material M1, for example, used paper or waste-paper that is no longer needed can be used. Alternatively, for example, as the fiber raw material M1, a sheet material including a fiber and a dextrin of which the molecular weight distribution has the above-described characteristics and adhering to the fiber may be used. The sheet material may be, for example, recycled paper or non-recycled paper.

In the following description, the case in which as the fiber raw material M1, waste-paper of a sheet material that is a composite including a fiber and a dextrin adhering to the fiber is used, and the manufactured compact is a sheet S that is recycled paper will be mainly described.

The compact-manufacturing apparatus 100 shown in FIG. 2 includes a sheet supply device 11, a coarse crushing section 12, a defibration section 13, a sorting section 14, a first web-forming section 15, a subdivision section 16, a mixing section 17, a dispersion section 18, a second web-forming section 19, a formation section 20, a cutting section 21, a stock section 22, a collecting section 27, and a controller 28 that controls the operation thereof. The coarse crushing section 12, the defibration section 13, the sorting section 14, the first web-forming section 15, the subdivision section 16, the mixing section 17, the dispersion section 18, the second web-forming section 19, the formation section 20, the cutting section 21, and the stock section 22 are respectively processing sections for processing the sheet.

The sheet supply device 11 and the coarse crushing section 12 or the defibration section 13 constitute a sheet-processing device 10A. The sheet-processing device 10A and the second web-forming section 19 constitute a fiber material accumulation device 10B.

The compact-manufacturing apparatus 100 includes a humidifying section 231, a humidifying section 232, a humidifying section 233, a humidifying section 234, a humidifying section 235, and a humidifying section 236. In addition, the compact-manufacturing apparatus 100 includes a blower 261, a blower 262, and a blower 263.

The humidifying sections 231 to 236 and the blowers 261 to 263 are electrically coupled to the controller 28, and the operations thereof are controlled by the controller 28. That is, in the present embodiment, one controller 28 controls the operation of each section of the compact-manufacturing apparatus 100. However, the configuration is not limited thereto, and, for example, the configuration may include a controller that controls the operation of each section of the sheet supply device 11 and a controller that controls the operation of sections other than the sheet supply device 11.

The compact-manufacturing apparatus 100 performs a raw material supplying step, a coarse crushing step, a defibrating step, a sorting step, a first web-forming step, a segmentation step, a mixing step, a discharging step, an accumulating step, a sheet-forming step, and a cutting step. The steps from the raw material supplying step to the mixing step correspond to the raw material-preparing step in the method for manufacturing a compact, and the sheet-forming step corresponds to the forming step in the method for manufacturing a compact. In addition, a step of humidification in each humidifying section described in detail later corresponds to the humidifying step.

The configuration of each section will now be described. The sheet supply device 11 is a portion where the raw material supplying step of supplying the fiber raw material M1 to the coarse crushing section 12 is performed. As described above, as the fiber raw material M1, a composite including a fiber and a dextrin adhering to the fiber can be used. In particular, the fiber raw material M1 can include a cellulose fiber as the fiber.

The coarse crushing section 12 is a portion where the coarse crushing step of coarsely crushing the fiber raw material M1 supplied from the sheet supply device 11 in the air, for example, in the atmosphere is performed. The coarse crushing section 12 includes a pair of crushing blades 121 and a chute 122.

The pair of crushing blades 121 rotate in the opposite direction to each other and coarsely crush the fiber raw material M1 therebetween, that is, cut the fiber raw material M1 into coarse fragments M2. The shape and the size of the coarse fragments M2 can be suitable for defibration treatment in the defibration section 13, and the coarse fragments M2 may be, for example, small pieces with a side length of 100 mm or less or small pieces with a side length of 10 mm or more and 70 mm or less.

The chute 122 is disposed under the pair of crushing blades 121, and may have, for example, a funnel-like shape. Consequently, the chute 122 can receive the coarse fragments M2 coarsely crushed by and falling from the crushing blades 121.

In addition, above the chute 122, a humidifying section 231 is disposed adjoining the pair of crushing blades 121. The humidifying section 231 humidifies the coarse fragments M2 in the chute 122. This humidifying section 231 is constituted of a vaporizing humidifier that includes a filter impregnated with water and supplies humidified air with increased humidity to the coarse fragments M2 by allowing the air to pass through the filter. The humidifying step described above can be performed by supplying the humidified air to the coarse fragments M2 to provide the above-described effects. In addition, adhesion of the coarse fragments M2 to the chute 122, etc. by static electricity can be prevented.

The chute 122 is coupled to the defibration section 13 via a tube 241. The coarse fragments M2 collected in the chute 122 pass through the tube 241 and are transported to the defibration section 13.

The defibration section 13 is a portion where the defibrating step of defibrating the coarse fragments M2 in the air, i.e., by a dry process is performed. Defibrated material M3 can be generated from the coarse fragments M2 by this defibration treatment in the defibration section 13. Here, the term "defibrate" refers to that a coarse fragment M2 formed by binding a plurality of fiber molecules is disentangled into individual fiber molecules. The disentangled product is the defibrated material M3. The shape of the defibrated material M3 is linear or strip-like. The defibrated material M3 may exist in a state of being intertwined and agglomerated, that is, in a state of forming a so-called "lump".

The defibration section 13, for example, in the present embodiment is constituted of an impeller mill including a rotary blade that rotates at a high speed and a liner located on the outer periphery of the rotary blade. The coarse fragments M2 flew into the defibration section 13 are sandwiched between the rotary blade and the liner and are defibrated.

In addition, the defibration section 13 can generate a flow of the air toward the sorting section 14 from the coarse crushing section 12, i.e., an air flow, by the rotation of the rotary blade. Consequently, the coarse fragments M2 can be sucked from the tube 241 to the defibration section 13. In addition, after the defibration treatment, the defibrated material M3 can be sent to the sorting section 14 via a tube 242.

A blower 261 is installed in the middle of the tube 242. The blower 261 is an air flow generator that generates an air flow toward the sorting section 14. Consequently, delivery of the defibrated material M3 to the sorting section 14 is accelerated.

The sorting section 14 is a portion where the sorting step of sorting the defibrated material M3 based on the length of the fiber is performed. In the sorting section 14, the defibrated material M3 is sorted into a first sorted material M4-1 and a second sorted material M4-2 that is larger than the first sorted material M4-1. The first sorted material M4-1 has a size suitable for subsequent manufacturing of a sheet S. The average length may be 1 µm or more and 30 µm or less. On the other hand, the second sorted material M4-2 includes, for example, those of insufficient defibration and of excessive aggregation of defibrated fiber molecules.

The sorting section 14 includes a drum section 141 and a housing section 142 for accommodating the drum section 141.

The drum section 141 is constituted of a cylindrical net and is a funnel that rotates around the central axis. The defibrated material M3 flows into the drum section 141, and the rotation of the drum section 141 sorts the defibrated material M3 smaller than the opening of the net as the first sorted material M4-1 and the defibrated material M3 larger than the opening of the net as the second sorted material M4-2. The first sorted material M4-1 falls from the drum section 141.

On the other hand, the second sorted material M4-2 is sent to a tube 243 coupled to the drum section 141. The tube 243 is coupled to the tube 241 on the opposite side to the drum section 141, i.e., on the upstream side. The second sorted material M4-2 passed through the tube 243 joins the coarse fragments M2 in the tube 241 and flows into the defibration section 13 together with the coarse fragments M2. Consequently, the second sorted material M4-2 returns to the defibration section 13 and is subjected to defibration treatment together with the coarse fragments M2.

The first sorted material M4-1 fell from the drum section 141 falls toward the first web-forming section 15 that is located under the drum section 141 while dispersing in the air. The first web-forming section 15 is a portion where the first web-forming step of forming a first web M5 from the first sorted material M4-1 is performed. The first web-forming section 15 includes a mesh belt 151, three stretching rollers 152, and an aspirator 153.

The mesh belt 151 is an endless belt, and the first sorted material M4-1 accumulates thereon. The mesh belt 151 is put around the three stretching rollers 152, and the first sorted material M4-1 on the mesh belt 151 is transported to the downstream side by the rotary drive of the stretching rollers 152.

The first sorted material M4-1 has a size larger than the opening of the mesh belt 151. Consequently, the first sorted material M4-1 is restricted from passing through the mesh belt 151 and thereby can accumulate on the mesh belt 151. In addition, the first sorted material M4-1 is transported to the downstream side together with the mesh belt 151, while accumulating on the mesh belt 151, and is thereby formed into a layered first web M5.

In the first sorted material M4-1, for example, dust and dirt may be mixed therein. Dust and dirt may be produced by, for example, coarse crushing or defibration. Such dust and dirt are collected in the collecting section 27.

The aspirator 153 is a suction mechanism that sucks air from a position under the mesh belt 151. Consequently, the dust and dirt passed through the mesh belt 151 can be sucked together with the air.

The aspirator 153 is coupled to the collecting section 27 via a tube 244. The dust and dirt sucked by the aspirator 153 are collected in the collecting section 27.

A tube 245 is further coupled to the collecting section 27. A blower 262 is installed in the middle of the tube 245. Operation of the blower 262 generates suction force in the aspirator 153. Consequently, the formation of the first web M5 on the mesh belt 151 is accelerated. In this first web M5, dust, dirt, and so on are removed. Dust and dirt pass through the tube 244 by the operation of the blower 262 and reach the collecting section 27.

The housing section 142 is coupled to a humidifying section 232. The humidifying section 232 is constituted of a vaporizing humidifier. Consequently, humidified air is supplied in the housing section 142. The above-described humidifying step can be performed by this humidified air, and the effects described above can be obtained. In addition, the first sorted material M4-1 can be humidified and thereby can be prevented from adhering to the inner wall of the housing section 142 by static electricity.

A humidifying section 235 is disposed on the downstream side of the sorting section 14. The humidifying section 235 is constituted of an ultrasonic humidifier that sprays water. Consequently, water can be supplied to the first web M5, and thereby the amount of water in the first web M5 can be adjusted. The humidifying step can be performed by this adjustment, and the effects described above can be obtained. In addition, adsorption of the first web M5 to the mesh belt 151 by static electricity can be prevented. Consequently, the first web M5 is easily detached from the mesh belt 151 at the position where the mesh belt 151 is folded back by the stretching rollers 152.

The subdivision section 16 is disposed on the downstream side of the humidifying section 235. The subdivision section 16 is a portion where the segmentation step of segmenting the first web M5 detached from the mesh belt 151 is performed. The subdivision section 16 includes a propeller 161 rotatably supported and a housing section 162 for accommodating the propeller 161, and can segment the first web M5 with the rotating propeller 161. The segmented first web M5 becomes the subdivided material M6. The subdivided material M6 goes down in the housing section 162.

The housing section 162 is coupled to a humidifying section 233. The humidifying section 233 is constituted of a vaporizing humidifier. Consequently, humidified air is supplied in the housing section 162. This humidifying step can be performed with the humidified air, and the effects described above can be obtained. In addition, adhesion of the subdivided material M6 to the propeller 161 and the inner walls of the housing section 162 by static electricity can be prevented.

The mixing section 17 is disposed on the downstream side of the subdivision section 16. The mixing section 17 is a portion where the mixing step of mixing the subdivided material M6 and an additive is performed. This mixing section 17 includes an additive feeding section 171, a tube 172, and a blower 173.

The tube 172 is a channel coupling between the housing section 162 of the subdivision section 16 and the housing 182 of the dispersion section 18, and a mixture M7 of the subdivided material M6 and an additive passes therethrough.

The additive feeding section 171 is coupled in the middle of the tube 172. The additive feeding section 171 includes a housing section 170 accommodating an additive and a screw feeder 174 provided in the housing section 170. The additive in the housing section 170 is extruded from the housing section 170 by the rotation of the screw feeder 174 and is supplied in the tube 172. The additive supplied in the tube 172 is mixed with the subdivided material M6 to give a mixture M7.

Here, examples of the additive supplied from the additive feeding section 171 include a bonding agent of bonding fiber molecules, a coloring agent for coloring the fiber, an aggregation inhibitor for suppressing aggregation of the fiber, a flame retardant for making the fiber, etc. hard to burn, a paper strength enhancer for reinforcing the paper strength of the sheet S, and a defibrated material, and one or a combination of two or more thereof can be used. The case that the additive is a dextrin P1 as a bonding agent, in particular, a dextrin P1 of which the molecular weight distribution curve has the above-described shape will now be described.

When the dextrin P1 is supplied from the additive feeding section 171, a sheet S can be obtained as a suitable compact, even when the content of the dextrin in the fiber raw material M1 is relatively low or when a relatively large proportion of the dextrin contained in the fiber raw material M1 is removed by the treatment using the compact-manufacturing apparatus 100. That is, the content of the dextrin in the sheet S as the finally obtained compact can be made sufficiently high, and the dextrin can adhere to the fiber forming the sheet S with high adhesion. As a result, the effects described above are more noticeable.

The dextrin P1 may satisfy the same conditions as the dextrin C2 described above as a component of the composite C100. Consequently, the same effects as described above are obtained.

As the additive to be supplied from the additive feeding section 171, the composite of the above-described embodiment, i.e., a composite including a fiber and a dextrin adhering to the fiber may be used instead of the dextrin P1.

Consequently, for example, when a sheet material including a fiber and a dextrin adhering to the fiber is used as the fiber raw material M1, the variation in composition of the second web M8, in particular, the variation in the presence of the dextrin in each portion can be suppressed, even if the mixing step in the mixing section 17 is simplified. As a result, the variation in composition of the sheet S as the finally obtained compact can be suppressed, and the reliability of the sheet S can be further excellent.

In addition, a blower 173 is installed in the middle of the tube 172 on the downstream side than the additive feeding section 171. The action of the rotating portion, such as a blade, included in the blower 173 accelerates the mixing of the subdivided material M6 and the dextrin P1. In addition, the blower 173 can generate an air flow toward the dispersion section 18. It is possible to stir the subdivided material M6 and the dextrin P1 in the tube 172 by this air flow. Consequently, the mixture M7 is transported to the dispersion section 18 in a state in which the subdivided material M6 and the dextrin P1 are uniformly dispersed. The subdivided material M6 in the mixture M7 is disentangled in the process of passing through the tube 172 and becomes a finer fibrous form.

As shown in FIG. 2, the blower 173 is electrically coupled to the controller 28, and the operation thereof is controlled. In addition, the amount of air to be sent into the drum 181 can be controlled by controlling the air flow rate of the blower 173.

Incidentally, although it is not shown, the tube 172 diverges into two at the end on the drum 181 side, and the diverged ends are respectively coupled to introduction ports (not shown) formed in the end faces of the drum 181.

The dispersion section 18 shown in FIG. 2 is a portion where the discharging step of disentangling the intertwined fiber molecules in the mixture M7 and discharging them is performed. The dispersion section 18 includes a drum 181 that introduces and discharges the mixture M7 as a defibrated material, a housing 182 for accommodating the drum 181, and a driving source 183 for rotary driving the drum 181.

The drum 181 is constituted of a cylindrical net and is a funnel that rotates around the central axis. The fiber and so on of the mixture M7 smaller than the opening of the net can pass through the drum 181 by the rotation of the drum 181. On this occasion, the mixture M7 is disentangled and is discharged together with air. That is, the drum 181 functions as a discharge section that discharges a material including the fiber.

The driving source 183 includes a motor, a speed reducer, and a belt (not shown). The motor is electrically coupled to the controller 28 via a motor driver. The rotary power output from the motor is decreased by the speed reducer. The belt is constituted of, for example, an endless belt, and is put around the output shaft of the speed reducer and the outer periphery of the drum. Consequently, the rotary power of the output shaft of the speed reducer is transmitted to the drum 181 via the belt.

The housing 182 is coupled to the humidifying section 234. The humidifying section 234 is constituted of a vaporizing humidifier. Consequently, humidified air is supplied in the housing 182. The inside of the housing 182 can be humidified by this humidified air, the humidifying step can be performed, and the effects described above can be obtained. Adhesion of the mixture M7 to the inner wall of the housing 182 by static electricity can also be prevented.

The mixture M7 discharged from the drum 181 falls toward the second web-forming section 19 located under the drum 181 while dispersing in the air. The second web-forming section 19 is a portion where the accumulating step of forming a second web M8 that is an accumulated product formed by accumulating the mixture M7 is performed. The second web-forming section 19 includes a mesh belt 191, a stretching rollers 192, and an aspirator 193.

The mesh belt 191 is a mesh member and is constituted of an endless belt in the configuration shown in the drawing. The mixture M7 dispersed and discharged by the dispersion section 18 accumulates on the mesh belt 191. This mesh belt 191 is put around the four stretching rollers 192, and the mixture M7 on the mesh belt 191 is transported to the downstream side by the rotary drive of the stretching rollers 192.

In the configuration shown in the drawing, as one example of the mesh member, the mesh belt 191 is used, but the present disclosure is not limited thereto. For example, a tabular member may be used.

Almost all of the mixture M7 on the mesh belt 191 has a size larger than the opening of the mesh belt 191. Consequently, the mixture M7 is restricted from passing through the mesh belt 191 and thereby can accumulate on mesh belt 191. In addition, the mixture M7 is transported to the downstream side together with the mesh belt 191, while accumulating on the mesh belt 191, and is thereby formed into a layered second web M8.

The aspirator 193 is a suction mechanism that sucks air from the lower portion of the mesh belt 191. Consequently, the mixture M7 can be sucked on the mesh belt 191, and thereby accumulation of the mixture M7 on the mesh belt 191 is accelerated.

A tube 246 is coupled to the aspirator 193. In addition, a blower 263 is installed in the middle of the tube 246. Suction force is generated in the aspirator 193 by the operation of the blower 263.

A humidifying section 236 is disposed on the downstream side of the dispersion section 18. The humidifying section 236 is constituted of an ultrasonic humidifier as in the humidifying section 235. Consequently, water can be supplied to the second web M8, and thereby the amount of water in the second web M8 can be adjusted. The humidifying step can be performed by this adjustment, and the effects described above can be obtained. In addition, adsorption of the second web M8 to the mesh belt 191 by static electricity can be prevented. Consequently, the second web M8 is easily detached from the mesh belt 191 at the position where the mesh belt 191 is folded back by the stretching rollers 192.

Incidentally, the total amount of water added in the humidifying sections 231 to 236 is not particularly limited, and the water content of the mixture at the time of completion of the humidifying step, i.e., the proportion of the mass of water contained in the second web M8 to the mass of the second web M8 humidified in the humidifying section 236, may be 15 mass% or more and 50 mass% or less, 18 mass% or more and 45 mass% or less, or 20 mass% or more and 40 mass% or less.

When the humidifying step is performed at least once before the second web M8 is formed, in the second web M8, at least part of the dextrin adheres to the fiber. Accordingly, the second web M8 corresponds to the composite in the above-described embodiment. In addition, when the humidifying step is not performed before the second web M8 is formed, a humidifying step for the second web M8 is performed in the humidifying section 236, and in the second web M8 at this time, at least part of the dextrin adheres to the fiber. Even in this case, the second web M8 located on the downstream side than the humidifying section 236 corresponds to the composite in the above-described embodiment.

A formation section 20 is disposed on the downstream side of the second web-forming section 19. The formation section 20 is a portion where the sheet-forming step of forming a sheet S from the second web M8, which is a mixture, is performed. This formation section 20 includes a pressurization suction 201 and a heating section 202.

The pressurization suction 201 includes a pair of calender rollers 203 and can apply a pressure to the second web M8 between the calender rollers 203 without heating. Consequently, the density of the second web M8 is increased. This second web M8 is transported toward the heating section 202. Incidentally, one of the pair of calender rollers 203 is a driving roller that is driven by the operation of a motor (not shown), and the other is a driven roller.

The heating section 202 includes a pair of heating rollers 204 and can apply a pressure to the second web M8 between the heating rollers 204 while heating. In the second web M8, the dextrin absorbed water by humidification adheres to the fiber by this heating and pressurization, and the second web M8 is pressurized and heated together with the dextrin to bond fiber molecules to each other through the dextrin. Consequently, a sheet S is formed, and this sheet S is transported toward the cutting section 21. Incidentally, one of the pair of heating rollers 204 is a driving roller that is driven by the operation of a motor (not shown), and the other is a driven roller.

A cutting section 21 is disposed on the downstream side of the formation section 20. The cutting section 21 is a portion where the cutting step of cutting the sheet S is performed. The cutting section 21 includes a first cutter 211 and a second cutter 212.

The first cutter 211 cuts the sheet S in a direction crossing the transportation direction of the sheet S, in particular, a direction orthogonal to the transportation direction of the sheet S.

The second cutter 212 cuts the sheet S in a direction parallel to the transportation direction of the sheet S on the downstream side of the first cutter 211. This cutting adjusts the width of the sheet S by removing the unnecessary parts of both ends in the width direction of the sheet S, and the part that has been cut and removed is the so-called "mimi (margin)".

Such cutting with the first cutter 211 and the second cutter 212 provides a sheet S having a desired shape and size, and this sheet S is further transported to the downstream side and is stored in a stock section 22.

Incidentally, the configuration of the formation section 20 is not limited to that of forming a sheet S as described above and may be, for example, a configuration of forming a block-like or spherical compact.

Each section of such a compact-manufacturing apparatus 100 is electrically coupled to the controller 28 described below, and the operation of each of the sections is controlled by the controller 28.

Here, shown is an example in which the compact-manufacturing apparatus 100 is used, and a compact or composite including a fiber and a dextrin of which the molecular weight distribution curve has a specific shape is used as a raw material. The use of the dextrin of which the molecular weight distribution curve has a specific shape can provide a compact in which the deterioration of the dextrin due to recycling is suppressed, the mechanical strength is high, and coloring is also suppressed. In contrast, when starch dissolved in water and dried is used, for example, as the technique described in JP-A-2004-115960, since the starch is degenerated, the paper manufactured by this technique is unsuitable for reproduction using the paper as a raw material, in particular, it is difficult to recycle multiple times.

Suitable embodiments of the present disclosure have been described above, but the present disclosure is not limited thereto.

For example, each section constituting the compact-manufacturing apparatus that is used for manufacturing a compact can be replaced with one having any configuration that can exhibit the same function. Furthermore, an arbitrary component may be added.

In the method for manufacturing a compact using a compact-manufacturing apparatus described in the embodiment above, a fiber raw material including a fiber and a dextrin having a predetermined molecular weight distribution is used, and the subdivided material obtained from the defibrated material of the fiber raw material and the dextrin of which the molecular weight distribution curve has a specific shape supplied from the additive feeding section are mixed in the mixing section. However, when a fiber raw material including a fiber and a dextrin of which the molecular weight distribution curve has a specific shape is used, there is no need to additionally use a dextrin of which the molecular weight distribution curve has a specific shape in the manufacturing of a compact. In this case, the additive feeding section can be omitted. In addition, with this, the subdivision section, the mixing section, the dispersion section, the second web-forming section, etc. can be omitted, and the compact-manufacturing apparatus may be configured such that the first web is directly supplied to the formation section.

In addition, the method for manufacturing a compact of the present disclosure is not limited to the case of using the above-described compact-manufacturing apparatus and may use any apparatus as long as the above-described mixing step, humidifying step, and forming step are included.

### 4. Example and Comparative Example

The present disclosure will now be further described using Examples and Comparative Example, but is not limited by the following examples.

### 4.1. Production of sample for evaluation

### 4.1.1. Preparation of dextrin

In Examples and Comparative Example, dextrins shown in Table 1 were prepared.

**Table 1**

| | Comparative Example 1 | Example 1 | Example 2 | Example 3 | Example 4 |
|---|---|---|---|---|---|
| Model No. of dextrin | NSP-EA | Amicol 5-L | Amicol 6-L | Amicol 6-H | Amicol 7-H |
| Water content | Specific tensile strength | | | | |
| % | Standardization based on specific tensile strength in Comparative Example 1 at a water content of 15% | | | | |
| 15 | 1.00 | 1.44 | 2.14 | 1.25 | 1.24 |
| 20 | 1.08 | 2.04 | 2.35 | 2.41 | 2.56 |
| 25 | 2.02 | 2.09 | 2.74 | 2.72 | 2.67 |

In Table 1, the column of Model No. of dextrin shows the model number and trade name of each enzyme dextrin manufactured by Nippon Starch Chemical Co., Ltd.

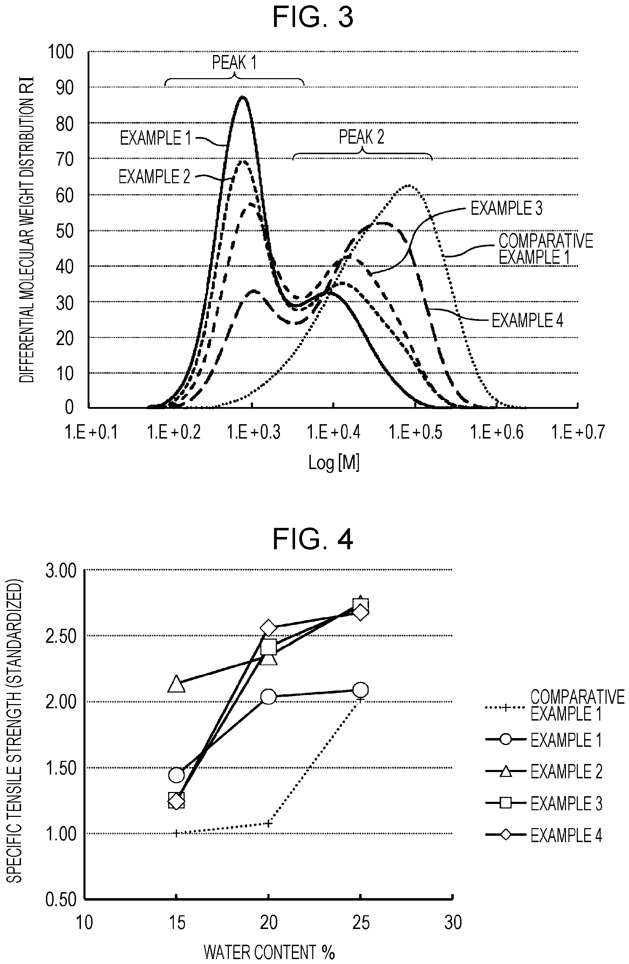

FIG. 3 shows the molecular weight distribution curve of each example. The horizontal axis of FIG. 3 indicates the molecular weight. The molecular weight distribution curve was measured as described above. In addition, Table 2 collectively shows the characteristics of the molecular weight distribution curve of each example. In the peak No. in Table 2, one peak in Comparative Example 1 is indicated as "1", and as shown in FIG. 3, the peak on the lower molecular weight side in each Example is indicated as "1", and the peak on the higher molecular weight side is indicated as "2". Furthermore, the area ratio (%) shows the ratio (%), in each Example having a minimum in the molecular weight distribution curve, of the area divided at the position of the minimum relative to the area surrounded by the entire curve and the baseline defined as 100%.

**Table 2**

| | Peak No. | Area ratio (%) | Ratio (S2/S1) | Weight average M.W. | Minimum M.W. |
|---|---|---|---|---|---|
| Comparative Example 1 | 1 | 100 | | 99096 | |
| Example 1 | 1 | 68.598 | 0.458 | 969 | 3238 |
| | 2 | 31.402 | | 17930 | |
| Example 2 | 1 | 57.406 | 0.742 | 1072 | 3694 |
| | 2 | 42.594 | | 32350 | |
| Example 3 | 1 | 49.309 | 1.028 | 1262 | 4109 |
| | 2 | 50.691 | | 32533 | |
| Example 4 | 1 | 27.694 | 2.611 | 1249 | 3371 |
| | 2 | 72.306 | | 52650 | |

### 4.1.2. Manufacturing of compact and recycled compact

In each Example, a sheet S as a compact was manufactured using a compact-manufacturing apparatus 100 as shown in FIG. 2 as follows.

First, as the fiber raw material M1, a plurality of sheets of G80 (manufactured by Mitsubishi Paper Mills Limited) made of a cellulose fiber were prepared. These sheets were accommodated in the accommodation section of the sheet supply device 11, and the dextrin powder (volume average particle diameter: 5 µm) of each example was accommodated in the housing section 170 of the additive feeding section 171. Subsequently, as described above, the compact-manufacturing apparatus 100 was operated.

As a result, in the mixing section 17, the cellulose fiber and the dextrin were mixed at a mixing ratio (dextrin/(fiber + dextrin): mass basis) of 20% to give a mixture M7 as a composite containing them.

The mixture M7 obtained in the mixing section 17 passed through the dispersion section 18 and was formed into a second web M8 as a composite containing the cellulose fiber and the dextrin in the second web-forming section 19.

Incidentally, humidification was performed in the humidifying section 231, the humidifying section 232, the humidifying section 233, the humidifying section 234, the humidifying section 235, and the humidifying section 236 such that the rate of the mass of water contained in the second web M8 to the mass of the second web M8 in the state humidified in the humidifying section 236 was the water content (mass%) (water/web: mass basis) shown in Table 1.

The water content was determined using a heat drying type moisture meter MX-50 (manufactured by A&D Co., Ltd.) under the following conditions:
Measurement mode: standard mode,
Heating method: standard heating,
Measurement accuracy (and end conditions): MID of ACCURACY,
Sample amount: about 0.5 g (automatically set depending on the measurement accuracy),
Sample plate temperature: 120°C, and
Unit (measured value): water content (before drying basis).

The second web M8 is heated and pressurized in the formation section 20 to be formed into a sheet S as a long compact. The heating temperature in the formation section 20 was 80°C, the heating time was 15 seconds, and the applied pressure in the formation section 20 was 70 MPa.

The thus obtained sheet S as a long compact was cut in the cutting section 21 into a sheet S of size A4.

Furthermore, the sheet S obtained in each example was accommodated and introduced in the accommodation section of the sheet supply device 11 as a raw material, and a recycled sheet S (recycled compact) of each example was manufactured under the same conditions as above except that the dextrin was not supplied from the additive feeding section 171.

### 4.2. Evaluation

The compacts and recycled compacts of Examples and Comparative Example were evaluated for the following specific tensile strength.

The specific tensile strength (N·m/g) of each of the compacts and recycle compacts of Examples and Comparative Example was measured with AUTOGRAP AGC-X 500N (manufactured by Shimadzu Corporation) in accordance with JIS P8113. The values standardized using the value obtained in Comparative Example 1 at a water content of 15% as a standard (1.00) are shown in Table 1. FIG. 4 shows a plot of the water content on the horizontal axis and the standardized specific tensile strength on the vertical axis.

As obvious from Table 1 and FIG. 4, the results were that the mechanical strength in each Example was excellent compared to Comparative Example. That is, the compact obtained in each Example could have excellent mechanical strength while securing biodegradability. In addition, it was demonstrated that when the water content was 20%, the mechanical strength was significantly improved as compared with Comparative Example. Furthermore, in Example 2, the mechanical strength was significantly high as compared with Comparative Example even if the water content was 15%. It is inferred that this significant effect of Example 2 is caused when the value of ratio (S2/S1) is about 0.7, as shown in Table 2 and FIG. 3.

It was also demonstrated that also in the composite in the process of forming the compact of each Example, the compact formed using this composite had good mechanical strength while maintaining good biodegradability. Furthermore, in each Example, the recyclability was also good. In contrast, in Comparative Example, the results were that although the biodegradability was considered to be good, the mechanical strength and the recyclability were insufficient.

The present disclosure includes the substantially same configuration as the configuration described in the embodiment, for example, a configuration having the same function, method, and result or a configuration having the same purpose and effect. In addition, the present disclosure includes a configuration in which the non-essential portion of the configuration described in the embodiment is replaced. The present disclosure also includes a configuration that exhibits the same effect or achieves the same purpose of those of the configuration described in the embodiment. The present disclosure also includes a configuration in which a known technique is added to the configuration described in the embodiment.

The following contents are induced from the above-described embodiments and modifications.

An aspect of the composite includes:
a fiber and a dextrin, wherein
at least part of the dextrin adheres to the fiber; and
the molecular weight distribution curve of the dextrin includes:
   a first maximum and a second maximum;
   the weight average molecular weight value based on a peak belonging to the first maximum is less than 6000; and
   the weight average molecular weight value based on a peak belonging to the second maximum is 6000 or more.

Since the composite includes a dextrin of which the molecular weight distribution is a so-called bimodal distribution, the compact formed using the composite, such as paper, can have good mechanical strength, while having good biodegradability. That is, the lower molecular weight dextrin enhances the adhesion to the fiber with a small amount of water, and the higher molecular weight dextrin enhances the binding strength between fiber molecules and the mechanical strength when they are bound. Accordingly, the mechanical strength of the compact, such as paper, can be improved by using this composite. Furthermore, since the amount of a dextrin having a medium molecular weight is relatively small, the low molecular weight dextrin and the high molecular weight dextrin are assigned to the respective functions, and the above-mentioned effects can be more efficiently exhibited. In addition, consequently, the low molecular weight dextrin can easily work, and the amount of water necessary for formation can be decreased.

In the aspect of the composite above,
the molecular weight distribution curve of the dextrin may have a minimum within a molecular weight range of 2000 or more and 10000 or less.

The mechanical strength of the compact, such as formed paper, is further improved by using this composite.

In the aspect of the composite above,
the molecular weight distribution curve of the dextrin has a minimum between the first maximum and the second maximum, and
the value of ratio (S2/S1) may be 0.3 or more and 8.0 or less, where
S1 is the area of the molecular weight distribution curve in the molecular weight range of less than the minimum, and
S2 is the area of the molecular weight distribution curve in the molecular weight range of not less than the minimum.

The compact can have good mechanical strength by using this composite, even if the compact is formed with a small water content.

In the aspect of the composite above,
the content of the dextrin may be 2.0 mass% or more and 60.0 mass% or less based on the total amount of the composite.

The mechanical strength of the compact, such as formed paper, is further improved by using this composite.

In the aspect of the composite above,
the fiber may be made of a material having a hydroxy group, a carbonyl group, or an amino group.

The mechanical strength of the compact, such as formed paper, is further improved by using this composite.

In the aspect of the composite above,
the fiber may be cellulose.

This composite has further excellent biodegradability.

An aspect of the compact uses the above-described composite as a raw material, and the compact is formed in a predetermined shape.

This compact has excellent mechanical strength while having good biodegradability.

In the aspect of the compact above,
the compact may be in a sheet-like shape.

An aspect of the method for manufacturing a compact includes;
a mixing step of mixing a fiber and a dextrin of which the molecular weight distribution curve has a first maximum and a second maximum, where
the weight average molecular weight value based on a peak belonging to the first maximum is less than 6000, and
the weight average molecular weight value based on a peak belonging to the second maximum is 6000 or more,
to obtain a mixture;
a humidifying step of humidifying the mixture; and
a forming step of pressurizing and heating the humidified mixture to obtain a compact.

According to this method for manufacturing a compact, a compact having good mechanical strength can be manufactured using a small amount of water and with reduced energy consumption.

In the aspect of the method for manufacturing an compact,
the water content of the mixture in the humidifying step is 20.0 mass% or less.

According to this manufacturing method, the energy consumption can be further reduced.

In the aspect of the method for manufacturing a compact,
the heating temperature in the forming step may be 60.0°C or more and 150.0°C or less.

According to this manufacturing method, the energy consumption can be further reduced.

In the aspect of the method for manufacturing a compact,
the fiber and the dextrin may include those obtained from the compact manufactured by the above-described manufacturing method.

According to this manufacturing method, even if the resulting compact is reused, a compact having good mechanical strength can be manufactured.

## Claims

1. A composite comprising:
a fiber; and
a dextrin, wherein
at least part of the dextrin adheres to the fiber;
a molecular weight distribution curve of the dextrin includes:
a first maximum; and
a second maximum, wherein
a weight average molecular weight value based on a peak belonging to the first maximum is less than 6000; and
a weight average molecular weight value based on a peak belonging to the second maximum is 6000 or more.

2. The composite according to claim 1, wherein
the molecular weight distribution curve of the dextrin includes a minimum within a molecular weight range of 2000 or more and 10000 or less.

3. The composite according to claim 1, wherein
the molecular weight distribution curve of the dextrin includes a minimum between the first maximum and the second maximum; and
a value of a ratio (S2/S1) is 0.3 or more and 8.0 or less, where
S1 is the area of the molecular weight distribution curve in a molecular weight range of less than the minimum, and
S2 is the area of the molecular weight distribution curve in a molecular weight range of not less than the minimum.

4. The composite according to claim 1, wherein
a content of the dextrin is 2.0 mass% or more and 60.0 mass% or less based on the total amount of the composite.

5. The composite according to claim 1, wherein
the fiber is made of a material having a hydroxy group, a carbonyl group, or an amino group.

6. The composite according to claim 1, wherein
the fiber is cellulose.

7. A compact formed into a predetermined shape by using the composite according to claim 1 as a raw material.

8. The compact according to claim 7, having a sheet-like shape.

9. A method for manufacturing a compact, comprising:
a mixing step of mixing a fiber and a dextrin of which a molecular weight distribution curve has a first maximum and a second maximum, where
a weight average molecular weight value based on a peak belonging to the first maximum is less than 6000, and
a weight average molecular weight value based on a peak belonging to the second maximum is 6000 or more to obtain a mixture;
a humidifying step of humidifying the mixture; and
a forming step of pressurizing and heating the humidified mixture to obtain a compact.

10. The method for manufacturing a compact according to claim 9, wherein
a water content of the mixture at the time of completion of the humidifying step is 20.0 mass% or less based on the total amount of the mixture.

11. The method for manufacturing a compact according to claim 9, wherein
a heating temperature in the forming step is 60.0°C or more and 150.0°C or less.

12. The method for manufacturing a compact according to claim 9, wherein
the fiber and the dextrin include those obtained from a compact manufactured by the manufacturing method.
